# FASCICULE DE BREVET EUROPEEN

(11) **EP 4 078 389 B1**
(45) Date de publication et mention de la délivrance du brevet: **23.07.2025**
(21) Numéro de dépôt: 20839245.6
(22) Date de dépôt: 16.12.2020
(51) Int. Cl.: H02J 7/00

(54) **PROCÉDÉ DE COMMUNICATION POUR CIRCUITS ÉLECTRONIQUES D'UNE BATTERIE D'ACCUMULATEURS ÉLECTRIQUES**
KOMMUNIKATIONSVERFAHREN FÜR ELEKTRONISCHE SCHALTUNGEN EINER ELEKTRISCHEN AKKUMULATORENBATTERIE
COMMUNICATION METHOD FOR ELECTRONIC CIRCUITS OF AN ELECTRICAL ACCUMULATOR BATTERY

(30) Priorité: 20.12.2019 FR 1915090
(43) Date de publication de la demande: 26.10.2022
(73) Titulaire: Commissariat à l'Energie Atomique et aux Energies Alternatives, 75015 Paris (FR)
(72) Inventeur: FERNANDEZ, Eric, 38054 Grenoble Cedex 09 (FR); BACQUET, Sylvain, 38054 Grenoble Cedex 09 (FR); DESPESSE, Ghislain, 38054 Grenoble Cedex 09 (FR); LOPEZ, Yan, 38054 Grenoble Cedex 09 (FR); THOMAS, Remy, 38054 Grenoble Cedex 09 (FR)
(74) Mandataire: Cabinet Beaumont
(86) Numéro de dépôt international: PCT/EP2020/086346
(87) Numéro de publication internationale: WO 2021/122690

(56) Documents cités:
- EP-B1- 1 641 178
- WO-A1-2017/046789
- FR-A1- 3 076 108
- US-A1- 2008 059 682
- US-A1- 2018 357 199
- US-B1- 6 452 946

## Description

La présente demande de brevet revendique la priorité de la demande de brevet français FR19/15090 qui sera considérée comme faisant partie intégrante de la présente description.

### Domaine technique

La présente description concerne de façon générale un procédé d'échange de données entre des circuits électroniques, notamment des circuits électroniques d'une batterie d'accumulateurs électriques, également appelée pack batterie.

### Technique antérieure

Il est connu de réaliser une batterie comprenant plusieurs étages ou modules dans chacun desquels des accumulateurs électriques, également appelés cellules, peuvent être connectés en série ou en parallèle par des interrupteurs commandables. Une telle batterie est adaptée à fournir une tension dont la forme d'onde varie dans le temps en faisant varier au cours du temps la connexion des cellules via la fermeture ou l'ouverture des interrupteurs.

La batterie peut comprendre un circuit de commande, appelé circuit de commande maître, pouvant transmettre des données à chaque module. Le circuit de commande maître peut notamment transmettre à chaque module des commandes de fermetures et/ou d'ouvertures des interrupteurs du module. Chaque module peut transmettre au circuit de commande maître des données, notamment des données issues de capteurs, par exemple la tension aux bornes de chaque cellule du module ou la température de chaque cellule du module.

Le circuit de commande maître peut recevoir une consigne, par exemple une consigne de tension et/ou de courant et/ou de connexion d'un nombre donné de cellules, et sélectionner les cellules à connecter ou à déconnecter pour chaque module de façon à obtenir la tension et/ou le courant souhaités. La transmission des commandes du circuit de commande maître aux modules est généralement considérée comme prioritaire, notamment par rapport aux autres signaux échangés entre le circuit de commande maître et les modules.

Pour certaines applications, il peut être souhaitable de prévoir un seul bus de communication bidirectionnel entre le circuit de commande maître et les modules, notamment pour réduire les coûts de fabrication du pack batterie. Il peut toutefois être difficile d'assurer un échange convenable des signaux entre le circuit de commande maître et les modules avec des priorités différentes attribuées aux signaux échangés, notamment lorsque la fréquence de transmission de commandes d'ouvertures et de fermetures d'interrupteurs du circuit de commande maître vers les modules est élevée. Les documents US 2008/059682, US 2018/357199, US 6 452 946, et FR 3 076 108 décrivent des procédés d'échange de données entre des circuits électroniques.

### Résumé de l'invention

Ainsi, un objet d'un mode de réalisation est de prévoir un procédé d'échange de données, notamment pour batterie, qui pallie au moins certains des inconvénients des procédés d'échange de données décrits précédemment.

Un autre objet d'un mode de réalisation est que la transmission des commandes du circuit de commande maître de la batterie aux modules ne soit pas perturbée par la transmission de données autres que les commandes entre les modules et le circuit de commande maître.

Un autre objet d'un mode de réalisation est d'empêcher des conflits entre les modules pour la transmission de signaux au circuit de commande maître.

Un mode de réalisation prévoit un procédé de communication entre un premier circuit électronique et des deuxièmes circuits électroniques par l'intermédiaire d'un bus bidirectionnel permettant la communication en duplex intégral, à chaque deuxième circuit électronique correspondant un identifiant unique, le procédé comprenant la transmission par le premier circuit électronique de premières trames sur le bus à destination des deuxièmes circuits électroniques, chaque première trame comprenant le même nombre de bits, les bits de chaque première trame étant répartis en groupes de bits successifs, les positions des groupes étant les mêmes dans chaque première trame, un premier groupe de bits parmi les groupes de bits correspondant à un premier identifiant parmi les identifiants, un deuxième groupe de bits parmi les groupes de bits correspondant à des commandes à exécuter par le deuxième circuit électronique correspondant au premier identifiant et un troisième groupe de bits parmi les groupes de bits correspondant à un deuxième identifiant parmi les identifiants, seul le deuxième circuit électronique correspondant au deuxième identifiant étant autorisé à émettre une deuxième trame à destination du premier circuit électronique sur le bus.

Selon un mode de réalisation, le premier circuit électronique modifie le troisième groupe de bits des premières trames pour balayer de façon cyclique l'ensemble des identifiants selon un ordre donné.

Selon un mode de réalisation, le premier circuit électronique émet une succession de premières trames avec le troisième groupe de mots correspondant au même deuxième identifiant s'il n'a pas reçu de deuxième trame émise par le deuxième circuit électronique correspondant au deuxième identifiant.

Selon un mode de réalisation, le premier circuit électronique émet successivement plusieurs premières trames avec le troisième groupe de mots correspondant à une valeur donnée ne correspondant pas à l'un des identifiants si, après l'émission de ladite succession de premières trames, il n'a toujours pas reçu de deuxième trame émise par le deuxième circuit électronique correspondant au deuxième identifiant.

Selon un mode de réalisation, le premier circuit électronique et les deuxièmes circuits électroniques font partie d'une batterie d'accumulateurs électriques, les accumulateurs électriques étant répartis en ensembles d'accumulateurs électriques, chaque deuxième circuit électronique correspondant au premier identifiant commandant la connexion ou la déconnexion de chaque accumulateur électrique de l'un des ensembles à partir desdites commandes.

Selon un mode de réalisation, les commandes sont des commandes de fermeture ou d'ouverture d'interrupteurs reliant les accumulateurs électriques.

Selon un mode de réalisation, lorsque le premier identifiant est identique au deuxième identifiant, le deuxième circuit électronique correspondant au premier identifiant exécute les commandes avant l'envoi de la deuxième trame.

Selon un mode de réalisation, chaque deuxième circuit électronique est relié à au moins un capteur de tension et/ou de courant, et la deuxième trame comprend des données représentatives d'au moins une valeur mesurée par le capteur relié au deuxième circuit électronique correspondant au deuxième identifiant.

Selon un mode de réalisation, la transmission par le premier circuit électronique des premières trames sur le bus à destination des deuxièmes circuits électroniques est réalisée de façon périodique.

Un mode de réalisation prévoit également un système électronique comprenant un premier circuit électronique et des deuxièmes circuits électroniques reliés au premier circuit électronique par un bus bidirectionnel configuré pour permettre la communication en duplex intégral, à chaque deuxième circuit électronique correspondant un identifiant unique, le premier circuit électronique étant configuré pour transmettre des premières trames sur le bus à destination des deuxièmes circuits électroniques, chaque première trame comprenant le même nombre de bits, les bits de chaque première trame étant répartis en groupes de bits successifs, les positions des groupes étant les mêmes dans chaque première trame, un premier groupe de bits parmi les groupes de bits correspondant à un premier identifiant parmi les identifiants, un deuxième groupe de bits parmi les groupes de bits correspondant à des commandes à exécuter par le deuxième circuit électronique correspondant au premier identifiant et un troisième groupe de bits parmi les groupes de bits correspondant à un deuxième identifiant parmi les identifiants, seul le deuxième circuit électronique correspondant au deuxième identifiant étant autorisé à émettre une deuxième trame à destination du premier circuit électronique sur le bus.

Selon un mode de réalisation, le système correspond à une batterie d'accumulateurs électriques, les accumulateurs électriques étant répartis en ensembles d'accumulateurs électriques, chaque deuxième circuit électronique étant configuré pour commander la connexion et la déconnexion de chaque accumulateur électrique de l'un des ensembles à partir desdites commandes.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon partielle et schématique, un mode de réalisation d'une batterie d'accumulateurs ;
la figure 2 est un schéma-blocs illustrant un mode de réalisation d'un procédé de communication dans la batterie de la figure 1 vu du côté du circuit de commande maître ;
la figure 3 est un schéma-blocs illustrant un mode de réalisation d'un procédé de communication dans la batterie de la figure 1 vu du côté d'un des circuits de commande esclave ; et
la figure 4 représente, de façon partielle et schématique, un exemple de module de la batterie de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les étapes et éléments utiles à la compréhension des modes de réalisation décrits ont été représentés et sont détaillés. En particulier, les fonctions classiques réalisées par un circuit de commande maître d'une batterie d'accumulateurs telles que l'équilibrage des cellules sont bien connues de l'homme du métier et ne sont pas décrites plus en détail par la suite. De plus, on appelle "signal binaire" un signal qui alterne entre un premier état constant, par exemple un état bas, noté "0", et un deuxième état constant, par exemple un état haut, noté "1". Les états haut et bas de signaux binaires différents d'un même circuit électronique peuvent être différents. En pratique, les signaux binaires peuvent correspondre à des tensions ou à des courants qui peuvent ne pas être parfaitement constants à l'état haut ou bas.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures. Sauf précision contraire, les expressions "environ", "approximativement", "sensiblement", et "de l'ordre de" signifient à 10 % près, de préférence à 5 % près.

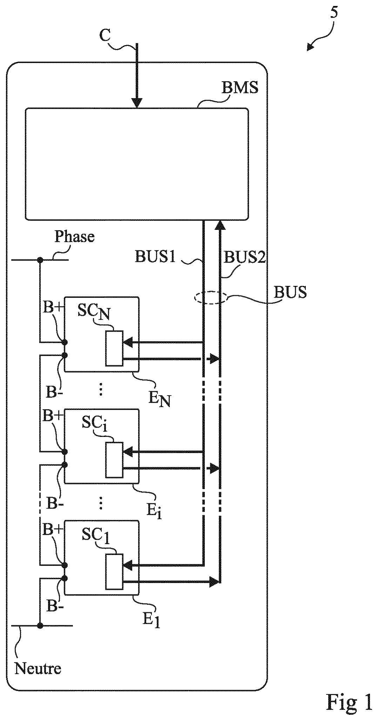

La figure 1 représente un mode de réalisation d'une batterie 5. La batterie 5 comprend N modules E₁ à E_{N}. Le nombre N est un nombre entier pouvant être compris entre 1 et 50. Chaque module comprend une borne positive B+ et une borne négative B- et plusieurs cellules, non représentées, pouvant être connectées entre elles, en série et/ou en parallèle, par l'intermédiaire d'interrupteurs, non représentés, entre les bornes B+ et B-. Les modules E₁ à E_{N} peuvent être connectés en série entre une première borne Neutre de la batterie 5 et une deuxième borne Phase de la batterie 5. Un exemple d'une telle batterie est décrit dans la demande de brevet WO 2012/117110.

La batterie 5 comprend un circuit BMS de commande des modules E₁ à E_{N}, appelé circuit de commande maître par la suite. Le circuit de commande maître BMS peut correspondre à un circuit dédié ou peut comprendre un processeur, par exemple un microprocesseur ou un microcontrôleur, adapté à exécuter des instructions d'un programme d'ordinateur stocké dans une mémoire. Le circuit de commande maître BMS peut échanger des données avec chaque module E₁ à E_{N} par l'intermédiaire d'un bus BUS de transmission de données, également appelé bus de communication. Le bus de transmission de données BUS est un bus bidirectionnel. Chaque module Eᵢ, i variant de 1 à N, comprend un circuit SCᵢ, appelé circuit de commande esclave par la suite, configuré pour commander les interrupteurs du module Eᵢ à partir de commandes fournies par le circuit de commande maître BMS. Chaque module Eᵢ comprend, en outre, des capteurs, non représentés, par exemple des capteurs de la tension aux bornes de chaque cellule du module, des capteurs du courant fourni par chaque cellule du module et/ou des capteurs de la température de chaque cellule du module. Le circuit de commande esclave SCᵢ de chaque module E₁ à E_{N} est adapté à transmettre au circuit de commande maître BMS des données par le bus de transmission de données BUS, par exemple des données représentatives des mesures de tensions, de courants, de températures, de l'état des cellules, etc.

Le circuit de commande maître BMS est configuré pour recevoir une consigne C, par exemple une consigne de tension et/ou de courant et/ou de connexion d'un nombre donné d'accumulateurs électriques entre les bornes Phase et Neutre, et pour sélectionner les cellules à connecter ou à déconnecter pour chaque module de façon à obtenir la tension et/ou le courant souhaités entre les bornes Phase et Neutre de la batterie 5. Le circuit de commande maître BMS fournit alors des commandes aux circuits de commande esclaves des modules par l'intermédiaire du bus de transmission de données BUS à partir desquelles le circuit de commande esclave SCᵢ de chaque module Eᵢ connecte ou déconnecte les cellules du module Eᵢ selon la configuration souhaitée.

Le bus de transmission de données BUS est un bus bidirectionnel. Selon un mode de réalisation, la batterie 5 ne comprend pas d'autre bus de transmission de données du circuit de commande maître BMS vers les modules E₁ à E_{N}, ni d'autre bus de transmission de données des modules E₁ à E_{N} vers le circuit de commande maître BMS. Selon un mode de réalisation, le bus de transmission de données BUS est un bus rapide, c'est-à-dire un bus sur lequel des données sont transmises avec un débit supérieur à 3 mégabits par seconde, de préférence compris entre 5 mégabits par seconde et 7 mégabits par seconde. A titre d'exemple, le bus de transmission de données BUS est un bus conforme à la norme RS485.

Selon un mode de réalisation, le bus de transmission de données BUS est un bus bidirectionnel qui permet une communication en duplex intégral, c'est-à-dire la transmission simultanée de signaux dans les deux sens. Le bus de transmission de données BUS peut comprendre au moins une première ligne BUS1 de transmission de données du circuit de commande maître BMS vers chaque circuit de commande esclave SCᵢ et une deuxième ligne BUS2 de transmission de données de chaque circuit de commande esclave SCᵢ vers le circuit de commande maître BMS.

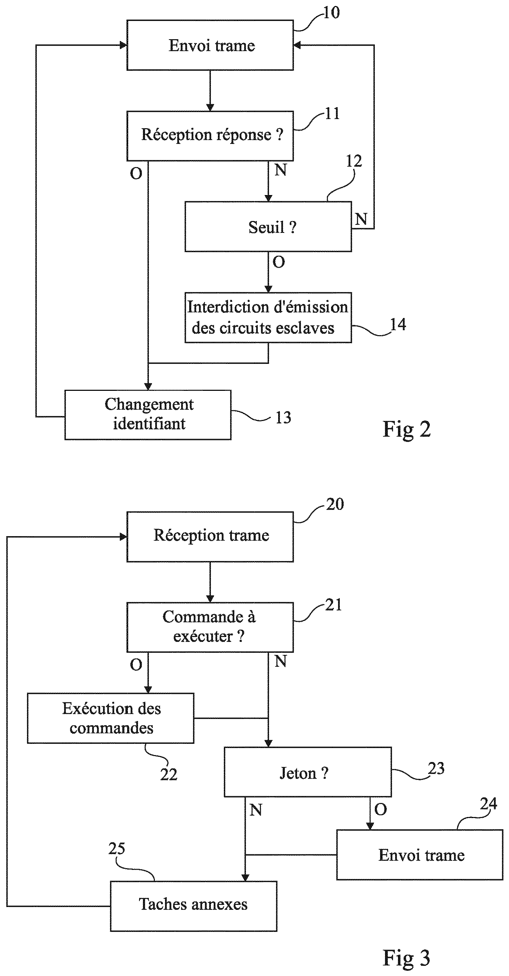

La figure 2 est un schéma-blocs illustrant un mode de réalisation d'un procédé de transmission de données du circuit de commande maître BMS vers les circuits de commande esclaves SC₁ à SC_{N}.

A une étape 10 (Envoi trame), le circuit de commande maître BMS transmet une trame de données sur le bus de transmission de données BUS. Une trame de données comprend une série de bits.

Selon un mode de réalisation, le circuit de commande maître BMS transmet sur le bus de transmission de données BUS des trames de façon sensiblement périodique. La fréquence de transmission des trames successives par le circuit de commande maître BMS sur le bus de transmission de données BUS peut être comprise entre 1 kHz et 50 kHz, par exemple égale à environ 20 kHz.

Selon un mode de réalisation, les trames transmises par le circuit de commande maître BMS sur le bus de transmission de données BUS ont la même taille, c'est-à-dire qu'elles comprennent chacune le même nombre de bits. Selon un mode de réalisation, chaque trame transmise par le circuit de commande maître BMS sur le bus de transmission de données BUS peut avoir un nombre de bits compris entre 50 bits et 100 bits, par exemple environ 70 bits.

Selon un mode de réalisation, les trames transmises par le circuit de commande maître BMS sur le bus de transmission de données BUS ont la même structure. Ceci signifie que les bits de la trame sont répartis en groupes de bits successifs, chaque groupe de bits correspondant à une donnée particulière, et la position de chaque groupe de bits dans la trame est la même d'une trame à l'autre, c'est-à-dire que pour chaque groupe, la position du premier bit du groupe est la même pour chaque trame et la position du dernier bit du groupe est la même pour chaque trame.

Le fait que les trames transmises par le circuit de commande maître BMS sur le bus de transmission de données BUS ont la même taille et la même structure permet, de façon avantageuse, de faciliter le traitement des trames par les circuits de commande esclaves.

Selon un mode de réalisation, à chaque circuit de commande esclave est associé un identifiant différent. Un premier groupe de bits parmi les groupes de bits de la trame correspond à un identifiant de l'un des modules E₁ à E_{N} auquel des commandes de connexion/déconnexion des cellules du module sont envoyées avec la même trame. Un deuxième groupe de bits parmi les groupes de bits de la trame correspond à des commandes de connexions/déconnexions des cellules, c'est-à-dire des commandes d'ouvertures/de fermetures des interrupteurs du module dont l'identifiant est celui du premier groupe. Selon un mode de réalisation, chaque trame émise par le circuit de commande maître BMS ne comprend les commandes de connexion/déconnexion de cellules, en totalité ou en partie, que pour un seul des modules E₁ à E_{N}. Selon un mode de réalisation, pour une valeur particulière du premier groupe de bits, les commandes du deuxième groupe de bits de la trame peuvent être traitées par chaque circuit de commande esclave comme lui étant destinées. Ceci permet de façon avantageuse d'envoyer les mêmes commandes simultanément à tous les circuits de commande esclaves.

Selon un mode de réalisation, le circuit de commande maître BMS réalise un équilibrage des cellules, c'est-à-dire que la sélection des cellules est réalisée de façon que les écarts entre les états de charge des cellules soient en permanence les plus faibles possibles. Selon un mode de réalisation, le circuit de commande maître BMS tient compte pour la sélection des cellules d'une éventuelle défaillance d'une cellule de façon, par exemple, à exclure cette cellule de la sélection. Selon un mode de réalisation, le circuit de commande maître BMS sélectionne des cellules à connecter/déconnecter en assurant que chaque cellule fonctionne dans sa plage de fonctionnement optimale en fonction des mesures de tensions, de courants et de température fournies par les modules.

Un troisième groupe de bits parmi les groupes de bits correspond à un identifiant de l'un des modules E₁ à E_{N} qui est autorisé à transmettre des données sur le bus de transmission de données BUS. Le module correspondant à l'identifiant du troisième groupe de bits peut être identique ou différent du module correspondant à l'identifiant du premier groupe de bits. L'identifiant du troisième groupe de bits est appelé jeton par la suite pour le distinguer de l'identifiant du premier groupe de bits.

Un quatrième groupe de bits parmi les groupes de bits de la trame correspond à des données autres que des commandes de connexion/déconnexion de cellules, appelées données lentes par la suite, et qui sont à destination de tous les circuits de commande esclaves. Les données lentes peuvent comprendre un mode de fonctionnement des modules du pack batterie, entre, par exemple, un mode de fonctionnement normal, dans lequel les cellules peuvent être connectées/déconnectées et un mode de fonctionnement de maintenance, dans lequel par exemple un programme est transmis aux circuits de commande esclaves. Les données lentes peuvent comprendre des données de programmation, notamment un programme exécuté par les circuits de commande esclaves.

De façon générale, la lecture des bits de la trame par chaque circuit de commande esclave, depuis le premier bit de la trame jusqu'au dernier bit de la trame, n'est pas réalisée en une seule fois, mais ensemble de bits après ensemble de bits, chaque ensemble de bits comprenant le même nombre de bits. Un groupe de bits tel que défini précédemment peut correspondre à plusieurs ensembles successifs de bits. Chaque ensemble de bits correspond par exemple à un octet.

Selon un mode de réalisation, l'un des bits de chaque ensemble de bits à une position fixe dans l'ensemble de bits, par exemple le bit de poids le plus fort de l'ensemble de bits ou le bit de poids le plus faible de l'ensemble de bits, est à un premier état, par exemple à "1", pour le premier ensemble de bits lu d'une trame, et est à un deuxième état, par exemple à "0", pour tous les autres ensembles de bits de la trame. Ceci permet de faciliter la détection de la réception d'une nouvelle trame par les circuits de commande esclaves.

Selon un mode de réalisation, l'un des bits de chaque ensemble de bits à une position fixe dans l'ensemble de bits, par exemple le bit de poids le plus fort de l'ensemble de bits ou le bit de poids le plus faible de l'ensemble de bits, est à un premier état, par exemple à "1", pour le dernier ensemble de bits lu d'une trame, et est à un deuxième état, par exemple à "0", pour tous les autres ensembles de bits de la trame. Ceci permet de faciliter la détection de la fin de la réception de la trame en cours par les circuits de commande esclaves.

A une étape 11 (Réception réponse ?), le circuit de commande maître BMS détermine s'il a reçu une réponse de la part du circuit de commande esclave correspondant au jeton de la trame émise à l'étape 10. Si, à l'étape 11, le circuit de commande maître BMS n'a pas reçu de réponse (N), le procédé se poursuit à une étape 12 (Seuil ?). Si, à l'étape 11, le circuit de commande maître BMS détermine avoir reçu une réponse du circuit de commande esclave correspondant au jeton de la dernière trame émise (O), le procédé se poursuit à une étape 13 (Changement identifiant).

A l'étape 12, le circuit de commande maître BMS détermine si suffisamment de trames comprenant le même jeton ont été émises. Si tel n'est pas le cas (N), le procédé se poursuit à l'étape 10 à laquelle le circuit de commande maître BMS émet une nouvelle trame avec le même jeton que la trame précédente. Toutefois, pour cette nouvelle trame, les premier, deuxième et quatrième groupes de données décrits précédemment peuvent être différents de ceux de la trame précédente émise par le circuit de commande maître BMS. Si, à l'étape 12, le circuit de commande maître BMS détermine que suffisamment de trames comprenant le même jeton ont été émises (O), le procédé se poursuit à une étape 14 (Attente). Le circuit de commande maître BMS détermine que suffisamment de trames comprenant le même jeton ont été émises, par exemple lorsque le nombre de trames émises successivement par le circuit de commande maître BMS avec le même jeton dépasse un nombre ou lorsque des trames sont émises successivement par le circuit de commande maître avec le même jeton pendant une durée déterminée, par exemple 1 ms.

A l'étape 14, le circuit de commande maître BMS transmet sur le bus de communication BUS, pendant une durée déterminée, des trames dont le jeton ne correspond à aucun des identifiants des circuits de commande esclaves (ou le jeton précédent), ce qui indique qu'aucun circuit de commande esclave n'est autorisé à émettre sur le bus de communication BUS. Cette durée déterminée peut être comprise entre 100 µs et 5 ms, par exemple égale à environ 500 µs. Ceci permet de tenir compte du cas où le circuit de commande esclave, correspondant au jeton de la dernière trame émise à l'étape 10 par le circuit de commande maître BMS, ne commence à répondre au circuit de commande maître BMS que peu après l'émission de cette trame. Le procédé se poursuit, après la durée déterminée, à l'étape 13.

A l'étape 13, le circuit de commande maître BMS modifie le jeton à utiliser dans la prochaine trame à émettre à l'étape 10 pour désigner un autre circuit de commande esclave. Le procédé se poursuit à l'étape 10 à laquelle le circuit de commande maître BMS émet une trame contenant le nouveau jeton sur le bus de communication BUS.

Selon un mode de réalisation, chaque circuit de commande esclave SCᵢ ne peut émettre une trame sur le bus de communication BUS qu'après réception d'une trame, émise par le circuit de commande maître BMS, comprenant le jeton qui lui correspond. Ceci permet d'empêcher que deux circuits de commande esclaves n'émettent simultanément des trames sur le bus de communication BUS. Le circuit de commande maître BMS change le jeton dans la prochaine trame à émettre seulement lorsqu'il a reçu une réponse satisfaisante de la part du circuit de commande esclave auquel correspond le jeton en cours d'utilisation ou lorsqu'un seuil est atteint comme cela a été décrit précédemment. Lorsque le circuit de commande maître BMS n'a pas reçu de réponse du circuit de commande esclave correspondant au dernier jeton utilisé à la fin de l'étape 14, le circuit de commande maître BMS peut alors considérer que le circuit de commande esclave auquel correspond le jeton est défaillant.

Selon un mode de réalisation, le circuit de commande maître BMS utilise, dans les trames émises, les jetons correspondant à tous les circuits de commande esclaves selon un ordre donné, par exemple du jeton correspondant au circuit de commande esclave SC₁ au jeton correspondant au circuit de commande esclave SC_{N}. Lorsque tous les identifiants ont été utilisés, le circuit de commande maître BMS recommence à utiliser les jetons depuis le début selon l'ordre donné. De ce fait, les circuits de commande esclaves sont autorisés à transmettre des données au circuit de commande maître BMS à tour de rôle. De façon avantageuse, ceci permet que chaque circuit de commande esclave soit interrogé régulièrement.

Selon un mode de réalisation, dès qu'un circuit de commande esclave reçoit une trame émise par le circuit de commande maître BMS comprenant le jeton qui lui est associé, il cherche à émettre en réponse une trame sur le bus de communication BUS le plus rapidement possible. Toutefois, selon un mode de réalisation, lorsque le circuit de commande esclave reçoit une trame émise par le circuit de commande maître BMS comprenant à la fois le jeton qui lui est associé et l'identifiant du premier groupe de bits qui lui est associé, le circuit de commande esclave exécute les commandes indiquées dans la trame avant d'essayer d'émettre en réponse une trame sur le bus de communication BUS.

La figure 3 est un schéma-blocs illustrant un mode de réalisation d'un procédé de transmission de données de l'un des circuits de commande esclaves SCᵢ sur le bus de communication BUS à destination du circuit de commande maître BMS. Ce procédé peut être mise en oeuvre par chaque circuit de commande esclave.

A une étape 20 (Réception trame), le circuit de commande esclave SCᵢ détecte une trame sur le bus de communication BUS émise par le circuit de commande maître BMS. Le procédé se poursuit à une étape 21 (Commande à exécuter ?).

A l'étape 21, le circuit de commande esclave détermine si le premier groupe de bits de la trame, correspondant à l'identifiant de l'un des modules E₁ à E_{N} auquel des commandes de connexion/déconnexion des cellules du module sont envoyées avec la même trame, correspond à son identifiant. Si le premier groupe correspond effectivement à l'identifiant du circuit de commande SCᵢ (O), le procédé se poursuit à une étape 22 (Exécution des commandes). Si le premier groupe ne correspond pas à l'identifiant du circuit de commande SCᵢ(N), le procédé se poursuit à une étape 23 (Jeton ?).

A l'étape 22, le circuit de commande esclave commande la connexion et/ou déconnexion d'accumulateurs électriques du module en fonction des commandes présentes dans la trame. Le procédé se poursuit à l'étape 23.

A l'étape 23, le circuit de commande esclave détermine si le jeton présent dans la trame reçue est celui qui lui correspond. Si le jeton correspond effectivement à celui du circuit de commande esclave SCᵢ (O), le procédé se poursuit à une étape 24 (Envoi trame). Si le jeton ne correspond pas à celui du circuit de commande esclave SCᵢ (N), le procédé se poursuit à une étape 25 (Taches annexes).

A l'étape 24, le circuit de commande esclave SCᵢ élabore une trame de réponse, qu'il transmet sur le bus de communication BUS. A titre d'exemple, la trame de réponse peut contenir les valeurs de tensions des cellules du module, les valeurs de température des cellules du module, les états de marche des cellules du module, d'autres défauts de fonctionnement du module et/ou des informations relatives aux programmes exécutés par le circuit de commande esclave SCᵢ.

A l'étape 25, le circuit de commande esclave réalise des taches secondaires autres que celles réalisées à l'étape 22 et l'étape 24. Il peut s'agir de la collecte de valeurs mesurées de tension, de courant, de température, etc., et le traitement des données collectées. L'étape 25 est interrompue dès réception d'une nouvelle trame émise par le circuit de commande maître BMS sur le bus de communication BUS. Le procédé se poursuit alors à l'étape 20. L'étape 24 peut également être interrompue dès réception d'une nouvelle trame émise par le circuit de commande maître BMS sur le bus de communication BUS, le procédé se poursuivant alors à l'étape 20.

La fréquence de transmission des trames par les circuits de commande esclaves vers le circuit de commande maître peut être inférieure à la fréquence de transmission des trames du circuit de commande maître vers les circuits de commande esclaves. La fréquence maximale de transmission des trames des circuits de commande esclaves vers le circuit de commande maître peut être de l'ordre de 100 Hz.

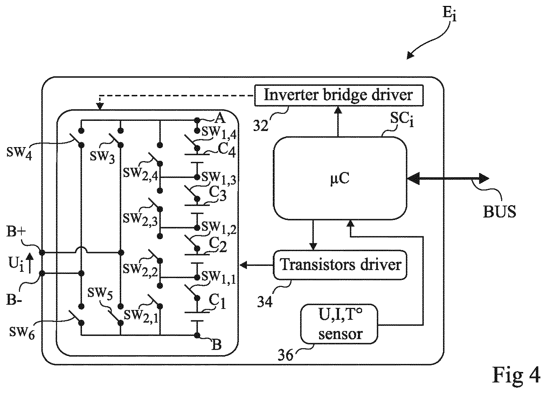

La figure 4 représente un mode de réalisation du module Eᵢ, où i varie de 1 à N.

Selon le présent mode de réalisation, le module Eᵢ est adapté à fournir une tension Uᵢ entre la borne positive B+ et la borne négative B-. Le module Eᵢ comprend des cellules C₁ à C_{M} où M est un nombre entier compris entre 2 et 10, de préférence entre 2 et 5, quatre cellules C₁, C₂, C₃ et C₄ étant représentées à titre d'exemple en figure 4. Les cellules C₁ à C_{M} sont reliées entre elles et aux bornes B+ et B- par des interrupteurs. Dans le présent mode de réalisation, pour chaque cellule Cₖ, k étant un nombre entier variant de 1 à M, le module Eᵢ comprend un premier interrupteur SW_{1,k} en série avec la cellule Cₖ et un deuxième interrupteur SW_{2,k} en parallèle de l'ensemble comprenant la cellule Cₖ et l'interrupteur SW_{1,k}. Les M ensembles comprenant la cellule Cₖ et le premier interrupteur SW_{1,k} sont disposés en série entre un noeud A et un noeud B. La commande des interrupteurs SW_{1,k} et SW_{2,k}, k variant de 1 à M, permet de mettre en série entre les noeuds A et B, 1 à M cellules parmi les M cellules C₁ à C_{M}. Dans le présent mode de réalisation, le module Eᵢ comprend en outre un pont inverseur, également appelé pont en H, entre les noeuds A et B et les bornes B+ et B- qui permet d'appliquer la tension présente entre les noeuds A et B entre les bornes B+ et B- dans les deux sens. Selon un mode de réalisation, le pont inverseur comprend un interrupteur SW₃ reliant le noeud A à la borne B+, un interrupteur SW₄ reliant le noeud A à la borne B-, un interrupteur SW₅ reliant le noeud B à la borne B+ et un interrupteur SW₆ reliant le noeud B à la borne B-. A titre d'exemple chaque interrupteur SW_{1,k} et SW_{2,k}, k variant de 1 à M, SW₃, SW₄, SW₅ et SW₆ peut correspondre à transistor à effet de champ à grille isolée, également appelé transistor MOS (Metal Oxide Semiconductor), notamment un transistor MOS de puissance, par exemple un transistor MOS à canal N.

Chaque module Eᵢ comprend, en outre, le circuit de commande esclave SCᵢ (µC) adapté à échanger des données émises par le circuit de commande maître BMS sur le bus de transmission de données BUS. Le circuit de commande esclave SCᵢ peut correspondre à un circuit dédié ou peut comprendre un processeur, par exemple un microprocesseur ou un microcontrôleur, adapté à exécuter des instructions d'un programme d'ordinateur stocké dans une mémoire.

Chaque module Eᵢ comprend, en outre, un circuit de pilotage 32 (Inverter bridge driver) relié aux interrupteurs SW₃, SW₄, SW₅ et SW₆ du pont inverseur et un circuit de pilotage 34 (Transistors driver) relié aux interrupteurs SW_{1,k} et SW_{2,k}, k variant de 1 à M. Chaque circuit de pilotage 32, 34 est adapté à convertir les signaux de commande fournis par le circuit de commande esclave SCᵢ en signaux adaptés à la commande des interrupteurs.

Chaque module Eᵢ comprend, en outre, des capteurs 36 (U, I, T° sensor) reliés au circuit de commande esclave SCᵢ. Le module Eᵢ peut comprendre, pour chaque cellule Cₖ, un capteur de température adapté à mesurer la température de la cellule Cₖ. Le module Eᵢ peut en outre comprendre, pour chaque cellule Cₖ, un capteur de tension adapté à mesurer la tension aux bornes de la cellule Cₖ. Le module Eᵢ peut en outre comprendre un capteur de courant adapté à mesurer le courant circulant au noeud A ou au noeud B. Le circuit de commande esclave SCᵢ de chaque module Eᵢ est adapté à transmettre des troisièmes données au circuit de commande maître BMS sur le bus de transmission de données BUS représentatives des mesures réalisées par les capteurs SCᵢ du module Eᵢ. Le nombre et le type de capteurs dépend notamment de l'agencement des cellules du module Eᵢ. Dans l'agencement de cellules représenté en figure 4, un seul capteur du courant circulant au noeud A ou au noeud B peut être prévu.

Dans le mode de réalisation de module Eᵢ de batterie illustré en figure 4, un ordre de connexion de la cellule Cₖ du module Eᵢ signifie que la cellule Cₖ doit être connectée en série entre les noeuds A et B du module Eᵢ, ce qui est obtenu en fermant l'interrupteur SW_{1,k} et en ouvrant l'interrupteur SW_{2,k}, et un ordre de déconnexion de la cellule Cₖ du module Eᵢ signifie que la cellule Cₖ ne doit pas être connectée en série entre les noeuds A et B du module Eᵢ, ce qui est obtenu en ouvrant l'interrupteur SW_{1,k} et en fermant l'interrupteur SW_{2,k}. Toutefois, pour un agencement différent des cellules Cₖ du module Eᵢ dans lequel les cellules Cₖ peuvent être agencées en série et/ou en parallèle entre elles entre les noeuds A et B, un ordre de connexion d'une cellule Cₖ précise en outre dans quelle configuration, série ou parallèle, la cellule Cₖ se trouve par rapport aux autres cellules du module Eᵢ.

Selon un mode de réalisation, le deuxième groupe défini précédemment de chaque trame peut, pour l'architecture des modules Eᵢ représentée en figure 4, comprendre :
- une commande d'ouverture/de fermeture des interrupteurs SW_{1,1} et SW_{2,1} ;
- une commande d'ouverture/de fermeture des interrupteurs SW_{1,2} et SW_{2,2} ;
- une commande d'ouverture/de fermeture des interrupteurs SW_{1,3} et SW_{2,3} ;
- une commande d'ouverture/de fermeture des interrupteurs SW_{1,4} et SW_{2,4} ; et
- la commande du pont en H.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, bien que, dans les modes de réalisation décrits précédemment, le circuit de commande maître BMS transmette sur le bus de transmission de données BUS des trames de façon sensiblement périodique, le circuit de commande maître BMS transmet sur le bus de transmission de données BUS des trames de façon irrégulière, par exemple aléatoire. Enfin, la mise en oeuvre pratique des modes de réalisation et variantes décrits est à la portée de l'homme du métier à partir des indications fonctionnelles données ci-dessus.

## Revendications

1. Procédé de communication entre un premier circuit électronique (BMS) et des deuxièmes circuits électroniques (SCᵢ) par l'intermédiaire d'un bus (BUS) bidirectionnel permettant la communication en duplex intégral, à chaque deuxième circuit électronique correspondant un identifiant unique, le procédé comprenant la transmission par le premier circuit électronique de premières trames sur le bus à destination des deuxièmes circuits électroniques, **caractérisé en ce que** chaque première trame comprenant le même nombre de bits, les bits de chaque première trame étant répartis en groupes de bits successifs, les positions des groupes étant les mêmes dans chaque première trame, les premières trames étant telles que, dans chaque première trame, un premier groupe de bits parmi les groupes de bits indique un premier identifiant correspondant parmi les identifiants, un deuxième groupe de bits parmi les groupes de bits indique des commandes correspondantes à exécuter par le deuxième circuit électronique correspondant au premier identifiant de la première trame et un troisième groupe de bits parmi les groupes de bits indique un deuxième identifiant correspondant parmi les identifiants, le procédé étant tel que, en réponse à chaque première trame de la pluralité de premières trames, seul le deuxième circuit électronique indiqué par le deuxième identifiant correspondant est autorisé à émettre une deuxième trame correspondante à destination du premier circuit électronique sur le bus.

2. Procédé selon la revendication 1, dans lequel le premier circuit électronique (BMS) modifie le troisième groupe de bits des premières trames pour balayer de façon cyclique l'ensemble des identifiants selon un ordre donné.

3. Procédé selon la revendication 1 ou 2, dans lequel le premier circuit électronique (BMS) émet une succession de premières trames avec le troisième groupe de mots correspondant au même deuxième identifiant s'il n'a pas reçu de deuxième trame émise par le deuxième circuit électronique (SCᵢ) correspondant au deuxième identifiant.

4. Procédé selon la revendication 3, dans lequel le premier circuit électronique (BMS) émet successivement plusieurs premières trames avec le troisième groupe de mots correspondant à une valeur donnée ne correspondant pas à l'un des identifiants si, après l'émission de ladite succession de premières trames, il n'a toujours pas reçu de deuxième trame émise par le deuxième circuit électronique (SCᵢ) correspondant au deuxième identifiant.

5. Procédé selon l'une quelconque des revendications 1 à 4, dans lequel le premier circuit électronique (BMS) et les deuxièmes circuits électroniques (SCᵢ) font partie d'une batterie (5) d'accumulateurs électriques (C₁, C₂, C₃, C₄), les accumulateurs électriques étant répartis en ensembles d'accumulateurs électriques, et dans lequel, pour chaque première trame desdites premières trames, le deuxième circuit électronique désigné par le premier identifiant correspondant commande la connexion ou la déconnexion de chaque accumulateur électrique de l'un des ensembles correspondants à partir desdites commandes correspondantes.

6. Procédé selon la revendication 5, dans lequel les commandes sont des commandes de fermeture ou d'ouverture d'interrupteurs (SW_{1,1}, SW_{1,2}, SW_{1,3}, SW_{1,4}, SW_{2,1}, SW_{2,2}, SW_{2,3}, SW_{2,4}, SW₃, SW₄, SW₅, SW₆) reliant les accumulateurs électriques (C₁, C₂, C₃, C₄).

7. Procédé selon l'une quelconque des revendications 1 à 6, dans lequel, lorsque le premier identifiant est identique au deuxième identifiant, le deuxième circuit électronique (SCᵢ) correspondant au premier identifiant exécute les commandes avant l'envoi de la deuxième trame.

8. Procédé selon l'une quelconque des revendications 1 à 7, dans lequel chaque deuxième circuit électronique (SCᵢ) est relié à au moins un capteur (36) de tension et/ou de courant, et dans lequel la deuxième trame comprend des données représentatives d'au moins une valeur mesurée par le capteur relié au deuxième circuit électronique correspondant au deuxième identifiant.

9. Procédé selon l'une quelconque des revendications 1 à 8, dans lequel la transmission par le premier circuit électronique (BMS) des premières trames sur le bus (BUS) à destination des deuxièmes circuits électroniques (SCᵢ) est réalisée de façon périodique.

10. Système électronique (5) comprenant un premier circuit électronique (BMS) et des deuxièmes circuits électroniques (SCᵢ) reliés au premier circuit électronique par un bus bidirectionnel (BUS) configuré pour permettre la communication en duplex intégral, à chaque deuxième circuit électronique correspondant un identifiant unique, le premier circuit électronique étant configuré pour transmettre des premières trames sur le bus à destination des deuxièmes circuits électroniques, **caractérisé en ce que** chaque première trame comprenant le même nombre de bits, les bits de chaque première trame étant répartis en groupes de bits successifs, les positions des groupes étant les mêmes dans chaque première trame, les premières trames étant telles que, dans chaque première trame, un premier groupe de bits parmi les groupes de bits indique un premier identifiant correspondant parmi les identifiants, un deuxième groupe de bits parmi les groupes de bits indique des commandes correspondantes à exécuter par le deuxième circuit électronique correspondant au premier identifiant de la première trame et un troisième groupe de bits parmi les groupes de bits indique un deuxième identifiant correspondant parmi les identifiants, seul le deuxième circuit électronique indiqué par le deuxième identifiant correspondant étant autorisé, en réponse à chaque première trame de la pluralité de premières trames, à émettre une deuxième trame correspondante à destination du premier circuit électronique sur le bus.

11. Système selon la revendication 10, comprenant en outre une batterie (5) d'accumulateurs électriques (C₁, C₂, C₃, C₄), les accumulateurs électriques étant répartis en ensembles d'accumulateurs électriques, chaque deuxième circuit électronique (SCᵢ) étant configuré pour commander la connexion et la déconnexion de chaque accumulateur électrique de l'un des ensembles à partir desdites commandes.

## Patentansprüche

1. Verfahren zur Kommunikation zwischen einer ersten elektronischen Schaltung (BMS) und zweiten elektronischen Schaltungen (SCᵢ) über einen bidirektionalen Bus (BUS), der eine Vollduplex-Kommunikation ermöglicht, wobei jede zweite elektronische Schaltung eine ihr zugeordnete eindeutige Kennung aufweist, wobei das Verfahren die Übertragung von ersten Frames oder Rahmen durch die erste elektronische Schaltung über den Bus an die zweiten elektronischen Schaltungen aufweist, **dadurch gekennzeichnet, dass** jeder erste Rahmen die gleiche Anzahl von Bits aufweist, wobei die Bits jedes ersten Rahmens in aufeinanderfolgenden Gruppen von Bits verteilt sind, wobei die Positionen der Gruppen in jedem ersten Rahmen gleich sind, wobei die ersten Rahmen so beschaffen sind, dass in jedem ersten Rahmen eine erste Gruppe von Bits unter den Gruppen von Bits eine entsprechende erste Kennung unter den Kennungen angibt, eine zweite Gruppe von Bits unter den Gruppen von Bits entsprechende Befehle angibt, die von der zweiten elektronischen Schaltung entsprechend der ersten Kennung des ersten Rahmens auszuführen sind, und eine dritte Gruppe von Bits unter den Gruppen von Bits eine entsprechende zweite Kennung unter den Kennungen angibt, wobei das Verfahren so ist, dass als Antwort auf den ersten Rahmen der mehreren ersten Rahmen nur die zweite elektronische Schaltung, die durch die entsprechende zweite Kennung angegeben ist, berechtigt ist, einen zweiten Rahmen über den Bus an die erste elektronische Schaltung zu übertragen.

2. Verfahren nach Anspruch 1, wobei die erste elektronische Schaltung (BMS) die dritte Gruppe von Bits der ersten Rahmen modifiziert, um alle Kennungen zyklisch gemäß einer vorgegebenen Reihenfolge abzutasten.

3. Verfahren nach Anspruch 1 oder 2, wobei die erste elektronische Schaltung (BMS) eine Folge von ersten Rahmen mit der dritten Wortgruppe sendet, die derselben zweiten Kennung entspricht, wenn sie keinen zweiten Rahmen empfangen hat, der von der zweiten elektronischen Schaltung (SCᵢ) entsprechend der zweiten Kennung gesendet wurde.

4. Verfahren nach Anspruch 3, wobei die erste elektronische Schaltung (BMS) nacheinander mehrere erste Rahmen mit der dritten Wortgruppe sendet, die einem vorgegebenen Wert entsprechen, der keiner der Kennungen entspricht, wenn sie nach dem Senden der Folge von ersten Rahmen immer noch keinen zweiten Rahmen empfangen hat, der von der zweiten elektronischen Schaltung (SCᵢ) gesendet wurde und der zweiten Kennung entspricht.

5. Verfahren nach einem der Ansprüche 1 bis 4, wobei die erste elektronische Schaltung (BMS) und die zweite elektronische Schaltung (SCᵢ) Teil einer Batterie (5) aus elektrischen Akkumulatoren (C₁, C₂, C₃, C₄) sind, wobei die elektrischen Akkumulatoren in Anordnungen von elektrischen Akkumulatoren verteilt sind, und wobei für jeden ersten Rahmen der ersten Rahmen die durch die entsprechende ersten Kennung bezeichnete zweite elektronische Schaltung das Verbinden oder Trennen jedes elektrischen Akkumulators einer der entsprechenden Anordnungen auf der Grundlage der entsprechenden Befehle steuert.

6. Verfahren nach Anspruch 5, wobei die Befehle Befehle zum Ein- oder Ausschalten von Schaltern (SW_{1,1}, SW_{1,2}, SW_{1,3}, SW_{1,4}, SW_{2,1}, SW_{2,2}, SW_{2,3}, SW_{2,4}, SW₃, SW₄, SW₅, SW₆) sind, die die elektrischen Akkumulatoren (C₁, C₂, C₃, C₄) koppeln.

7. Verfahren nach einem der Ansprüche 1 bis 6, wobei, wenn die erste Kennung mit der zweiten Kennung identisch ist, die der ersten Kennung entsprechende zweite elektronische Schaltung (SCᵢ) die Befehle vor dem Senden des zweiten Rahmens ausführt.

8. Verfahren nach einem der Ansprüche 1 bis 7, wobei jede zweite elektronische Schaltung (SCᵢ) mit mindestens einem Spannungs- und/oder Stromsensor (36) gekoppelt ist und wobei der zweite Rahmen Daten aufweist, die mindestens einen Wert repräsentieren, der von dem Sensor gemessen wird, der mit der zweiten elektronischen Schaltung gekoppelt ist, die der zweiten Kennung entspricht.

9. Verfahren nach einem der Ansprüche 1 bis 8, wobei die Übertragung der ersten Rahmen durch die erste elektronische Schaltung (BMS) über den Bus (BUS) an die zweiten elektronischen Schaltungen (SCᵢ) periodisch erfolgt.

10. Elektronisches System (5), aufweisend eine erste elektronische Schaltung (BMS) und zweite elektronische Schaltungen (SCᵢ), die über einen bidirektionalen Bus (BUS) mit der ersten elektronischen Schaltung gekoppelt sind, der so konfiguriert ist, dass er eine Vollduplex-Kommunikation ermöglicht, wobei jede zweite elektronische Schaltung eine ihr zugeordnete eindeutige Kennung aufweist, wobei die erste elektronische Schaltung so konfiguriert ist, dass sie erste Frames oder Rahmen über den Bus an die zweiten elektronischen Schaltungen überträgt, **dadurch gekennzeichnet, dass** jeder erste Rahmen die gleiche Anzahl von Bits aufweist, wobei die Bits jedes ersten Rahmens in aufeinanderfolgenden Gruppen von Bits verteilt sind, wobei die Positionen der Gruppen in jedem ersten Rahmen gleich sind, wobei die ersten Rahmen so beschaffen sind, dass in jedem ersten Rahmen eine erste Gruppe von Bits unter den Gruppen von Bits eine entsprechende erste Kennung unter den Kennungen angibt, eine zweite Gruppe von Bits unter den Gruppen von Bits entsprechende Befehle angibt, die von der zweiten elektronischen Schaltung entsprechend der ersten Kennung auszuführen sind, und eine dritte Gruppe von Bits unter den Gruppen von Bits eine entsprechende zweite Kennung unter den Kennungen angibt, wobei nur die zweite elektronische Schaltung, die durch die entsprechende zweite Kennung angegeben ist, als Antwort auf jeden ersten Rahmen der mehreren ersten Rahmen berechtigt ist, einen entsprechenden zweiten Rahmen über den Bus an die erste elektronische Schaltung zu übertragen.

11. System nach Anspruch 10, ferner aufweisend eine Batterie (5) aus elektrischen Akkumulatoren (C₁, C₂, C₃, C₄), wobei die elektrischen Akkumulatoren in Anordnungen von elektrischen Akkumulatoren verteilt sind, wobei jede zweite elektronische Schaltung (SCᵢ) so konfiguriert ist, dass sie das Verbinden und Trennen jedes elektrischen Akkumulators einer der Anordnungen auf der Grundlage der Befehle steuert.

## Claims

1. Method of communication between a first electronic circuit (BMS) and second electronic circuits (SCᵢ) via a bidirectional bus (BUS) allowing the full duplex communication, each second electronic circuit having a single identifier corresponding thereto, the method comprising the transmission by the first electronic circuit of first frames over the bus to the second electronic circuits, **characterized in that** each first frame comprising the same number of bits, the bits of each first frame being distributed in successive groups of bits, the positions of the groups being the same in each first frame, the first frames being such that, in each first frame, a first group of bits among the groups of bits indicates a corresponding first identifier among the identifiers, a second group of bits among the groups of bits indicates corresponding orders to be executed by the second electronic circuit corresponding to the first identifier of the first frame, and a third group of bits among the groups of bits indicates a corresponding second identifier among the identifiers, the method being such that, as a response to the first frame of the plurality of first frames, only the second electronic circuit indicated by the corresponding second identifier is authorized to transmit a second frame to the first electronic circuit over the bus.

2. Method according to claim 1, wherein the first electronic circuit (BMS) modifies the third group of bits of the first frames to cyclically scan all the identifiers according to a given order.

3. Method according to claim 1 or 2, wherein the first electronic circuit (BMS) transmits a succession of first frames with the third group of words corresponding to the same second identifier if it has not received a second frame transmitted by the second electronic circuit (SCᵢ) corresponding to the second identifier.

4. Method according to claim 3, wherein the first electronic circuit (BMS) successively transmits a plurality of first frames with the third group of words corresponding to a given value which does not correspond to one of the identifiers if, after the transmission of said succession of first frames, it still has not received a second frame transmitted by the second electronic circuit (SCᵢ) corresponding to the second identifier.

5. Method according to any of claims 1 to 4, wherein the first electronic circuit (BMS) and the second electronic circuits (SCᵢ) form part of a battery (5) of electrical accumulators (C₁, C₂, C₃, C₄), the electrical accumulators being distributed in assemblies of electrical accumulators, and wherein, for each first frame of said first frames, the second electronic circuit designated by the corresponding first identifier controls the connection or the disconnection of each electrical accumulator of one of the corresponding assemblies based on said corresponding orders.

6. Method according to claim 5, wherein the orders are orders to turn on or off switches (SW_{1,1}, SW_{1,2}, SW_{1,3}, SW_{1,4}, SW_{2,1}, SW_{2,2}, SW_{2,3}, SW_{2,4}, SW₃, SW₄, SW₅, SW₆) coupling the electrical accumulators (C₁, C₂, C₃, C₄).

7. Method according to any of claims 1 to 6, wherein, when the first identifier is identical to the second identifier, the second electronic circuit (SCᵢ) corresponding to the first identifier executes the orders before the sending of the second frame.

8. Method according to any of claims 1 to 7, wherein each second electronic circuit (SCᵢ) is coupled to at least one voltage and/or current sensor (36) and wherein the second frame comprises data representative of at least one value measured by the sensor coupled to the second electronic circuit corresponding to the second identifier.

9. Method according to any of claims 1 to 8, wherein the transmission by the first electronic circuit (BMS) of the first frames over the bus (BUS) to the second electronic circuits (SCᵢ) is performed periodically.

10. Electronic system (5) comprising a first electronic circuit (BMS) and second electronic circuits (SCᵢ) coupled to the first electronic circuit by a bidirectional bus (BUS) configured to allow the full duplex communication, each second electronic circuit having a single identifier corresponding thereto, the first electronic circuit being configured to transmit first frames over the bus to the second electronic circuits, **characterized in that** each first frame comprising the same number of bits, the bits of each first frame being distributed in successive groups of bits, the positions of the groups being the same in each first frame, the first frames being such that, in each first frame, a first group of bits among the groups of bits indicates a corresponding first identifier among the identifiers, a second group of bits among the groups of bits to indicates corresponding orders to be executed by the second electronic circuit corresponding to the first identifier, and a third group of bits among the groups of bits indicates a corresponding second identifier among the identifiers, only the second electronic circuit indicated by the corresponding second identifier being authorized, as a response to each first frame of the plurality of first frames, to transmit a corresponding second frame to the first electronic circuit over the bus.

11. System according to claim 10, further comprising a battery (5) of electrical accumulators (C₁, C₂, C₃, C₄), the electrical accumulators being distributed in assemblies of electrical accumulators, each second electronic circuit (SCᵢ) being configured to control the connection and the disconnection of each electrical accumulator of one of the assemblies based on said orders.
